# EUROPEAN PATENT SPECIFICATION

(11) **EP 3 787 391 B1**
(45) Date of publication and mention of the grant of the patent: **15.05.2024**
(21) Application number: 19796003.2
(22) Date of filing: 29.05.2019
(51) Int. Cl.: A01D 43/073, A01D 87/00

(54) **HARVESTER FOR STRAW-LIKE MATERIAL**
ERNTEMASCHINE FÜR STROHARTIGES ERNTEGUT
MOISSONNEUSE POUR RÉCOLTE DE TYPE PAILLE

(30) Priority: 04.05.2018 FI 20187065
(43) Date of publication of application: 10.03.2021
(73) Proprietor: Oy El-Ho Ab, 68910 Bennäs (FI)
(72) Inventor: LÖFBACKA, Johan, 68930 Purmo (FI); WEST, Filip, 68600 Jakobstad (FI); LÖFVIK, Joakim, 68910 Bennäs (FI)
(74) Representative: Kolster Oy Ab
(86) International application number: PCT/FI2019/000009
(87) International publication number: WO 2019/211512

(56) References cited:
- EP-A1- 0 761 089
- EP-A1- 0 761 089
- CN-A- 105 773 326
- CN-A- 105 773 326
- DE-A1- 19 647 522
- DE-A1-102008 023 022
- DE-A1-102008 023 022
- DE-C- 656 070
- GB-A- 982 973
- GB-A- 982 973
- GB-A- 2 161 065
- US-A- 4 592 514
- US-A- 6 097 425

## Description

The present innovation is related to arrangements on a particularly within agriculture used harvester for straw-like crop as, for example, a chopper pulled behind a conventional tractor, equipped with a collecting device with a rotor to lift swaths of straw shaped crop up in the machine, a transport unit to move the material closer to the chopper unit, a feed unit equipped with metering rollers, to ensure an even feed of the material to the chopping rotor and thus ensure an even chop length and to prevent a blockage of the chopper unit. In an advantageous embodiment this consist of a combined chop- and turbo unit with associated with adjusted means and with exhaust chute with adjusting- and control means.

As grass is harvested to silage it is essential that the straw-shaped material first is chopped short to ensure as tight compaction of the crop in the silo as possible. This to minimize enclosure of air, whose oxygen content disturbs the anaerobic lactic acid fermentation, the base for the whole silage process.

Previously there is known from GB 982973 A, for instance, a harvester for straw-like material for being connected to a tractor. This harvester comprises a collecting unit, a chopper unit, a feeder unit and a drive shaft for connecting a center shaft of the chopper unit to a PTO in the tractor. In a work position, the harvester is located straight behind the tractor and the drive shaft is connected straight to the PTO of the tractor. An axis of rotation of the chopper drum and the feeder unit are parallel with each other and with the driving direction at straight paths, whereby a projection of the chopper unit is positioned within the width of the tractor.

A traditional example of a known chopper type is, for example, the double chopper, as presented in the FI 953016 (Oy El-Ho Ab) patent document. In this, the standing crop is cut with a cutting rotor (4) equipped with knives and throws the cut material into an auger conveyor (4) for feed into the chopping unit (6), who further chops the material short and blow it out through the outlet (8) to an transport trailer.

This type of direct cutting choppers is still widely in use in many countries on smaller and middle size farms. Typically these double choppers are connected to tractors in the power range of 60-100kW.

As one like to increase the energy content of the grass silage, it is essential to reduce the water content in the crop before it is chopped. The higher the water content, the more the acid, produced in the anaerobic lactic acid fermentation is diluted by water and the more sugar is used in the fermentation process before the ph value of the fodder sink to a stable level, by which growth of mold and fungicide's stop.

Therefore today mostly trailed choppers equipped with conventional pickups are used for harvesting of wilted grass.

As the requirement for even chop length have increased to make an even compressing of the fodder in the silo more easy in order to get rid of the air and so ensure the anaerobic fermentation, the choppers with flywheel type of rotors have more or less totally dropped from the market in countries with more advanced agriculture.

In countries with suitable climate and soil to enable cultivation of corn, self-propelled choppers are widely used. These can be equipped either with cutting heads for corn or with a collection device for cut grass at the front.

Such self-propelled machines are however very expensive and need specially educated service technicians for maintenance and repair. Therefore large areas, long seasons and big enough market potential in a certain geographic area are required to reach economical profitability also for the service side.

The higher the latitude, the shorter are the harvest periods and as the climate turns unsuitable for corn, the available period of operation is further cut by the half for these self-propelled choppers. Thus these are relatively rare in the Nordic grassland areas without corn.

As the size of the agricultural tractors has rapidly grown in the recent years potential for cost-effective machines for grass harvest has arisen to fully be able to benefit their motor capacity also in the power ranges over 200kW. At the same time, the knowledge of the importance of even chop length has all-time increased. The bigger tractor powered grass choppers are almost unexceptional of trailed type and are turned to the side of the tractor into work position.

In the known trailed chopper models, who turn to the side of the tractor and where the chopper rotor has the shape of a cylindrical drum (for even chopping length) the axis of rotation of their chopping rotor is perpendicular to the driving direction.

To enable transmitting of really big motor power from the tractor PTO to the chopper is therefore required powerful and heavy swivel gearboxes (= turn able double gearboxes) in both ends of the drawbar. In addition to the increase in production costs due to these gearboxes, they also consume a good amount of energy and require good cooling and regular maintenance.

To be able to build the ergonomic user-friendly harvesting machine suitable for really big tractors in the power range of 150-250kW an arrangement for a harvester according to the present invention has been developed.

The above mentioned object of the invention is achieved with a harvester as defined in independent claim 1.

The most important benefits of this invention are partly that the chopper can be driven with a pulling line straight behind the tractor and therefore side drafts and slipping on moisture surfaces are practically totally eliminated.

As the cylindrical chopping rotor, contrary to the conventional trailed choppers with cylindrical chopping rotors, in work position is situated straight behind the tractor, in such a position that its axis of rotation is the driving direction. The need for heavy and power consuming swivel gearboxes is eliminated and the chopper will thus be cost-effective to its construction and energy effective in use. The chopping rotor can be direct driven from the 1000rpm PTO of the tractor through a standard driveshaft and thus work with a minimum of power losses.

What comes to further benefits we refer to the more detailed description and to the subsequent patent claims.

An advantageous embodiment of the invention is presented in the following by means of the drawings:
- Fig. 1: presents the harvester (1) with a connected transport trailer (16), bout town by the tractor 7.
- Fig. 2: presents the same chopper without a connected trailer.
- Fig. 3: presents the collection unit (6) from above with the top cover plate dismantled.
- Fig. 4: presents a cut close-up of the tension roller (79) of the toothed belt (78) of the transport augers (26).
- Fig. 5: presents the outlet of the auger conveyor unit (26) with the mounting plate (31) for the support bearing and with one of the two spiral extensions (32) mounted.
- Fig. 6: shows the outer end of the auger conveyor unit (26) with the bottom tray (84) for the spiral extension (32).
- Fig. 7: shows the outer part of the rapidly rotating pickup roller (22) in an oblique projection.
- Fig. 8: shows an axial projection of the pickup roller (22) seen from the outermost end.
- Fig. 9: shows a simplified cross-section of the collection unit with a metal detector (89) mounted.
- Fig. 10: shows a cross-section of the chopper unit (4).
- Fig. 11: shows the chopped drum (41) from the driven end in oblique projection.
- Fig. 12: shows the feed unit (30) from the front side with its hydraulic motors (49, 50, 51).
- Fig. 13: shows the feed unit (30) in oblique front projection with the chain transmission (54) that joins the lower feed rollers (33)
- Fig. 14: shows the principal scheme of the hydraulic- mechanical drive and synchronization of the feed rollers.
- Fig. 15: shows the mounting and adjustment of the counter knife (40).
- Fig. 16: shows the grinding mechanism (67) of the chopping knives (42).
- Fig. 17: shows the chopper (1) behind a tractor (7) and with dotted lines the lifting of the collection unit (6) into transport position.

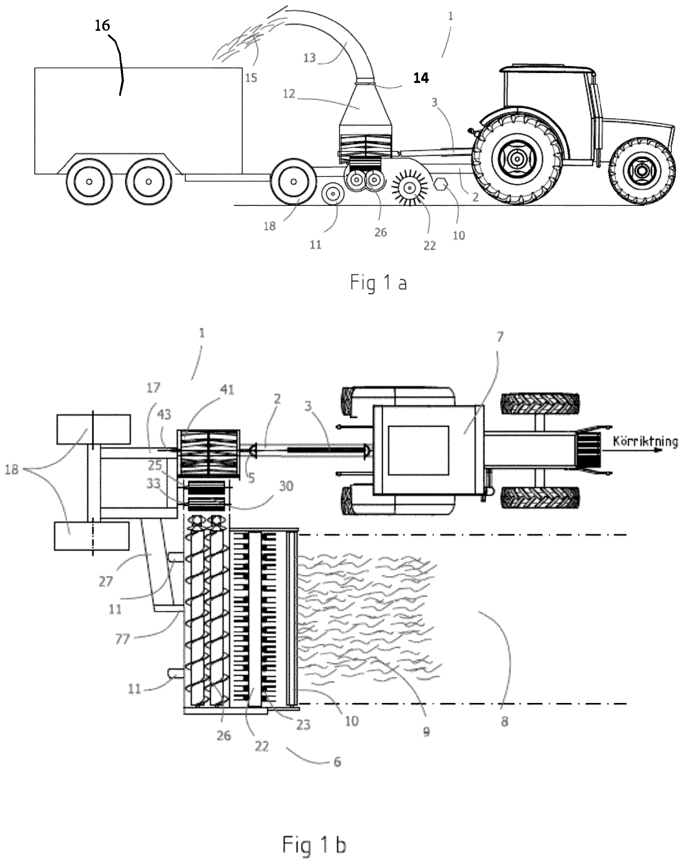

Fig. 1 show in work position an advantageous embodiment of the chopper according to the present innovation. The chopper (1) shows a drawbar (2) connected to the normal tow connection of the tractor (7). Above the drawbar the power take of the shaft (3) is seen, the front part connected straight to the PTO of the tractor and at the rear straight to the drive shaft (5) of the chopper unit (4).

In work position, the collection unit (6) is folded down to follow the ground next to the tractor, with the pick-up area (8) and the swath (9) well in the driver's sight through the side window of the tractor. In a conventional manner, the collection unit is at the front equipped with a smoothing roller (10) and at the rear with height adjustment wheels (11).

The straw shaped material (9) is cut in the chopper (4) by the knives of the chopper (4) to the pre-defined cut length and thrown by the integrated turbo unit (44) up in the outlet (12). In a conventional manner, there is provided a turn bearing (14) between the tower and the outlet pipe (13) to enable control of the blown material (15) into the transport trailer (16).

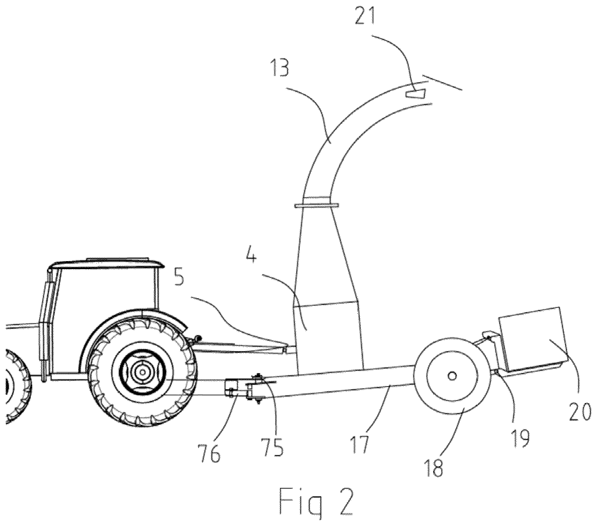

Fig 2. Shows the same chopper without the transport trailer. Here the chopper unit (4) and the drive shaft (5) of the chopper unit and the outlet pipe (13) partly folded down into transport position.

Further the inner pivot (75) of the drawbar together with the drawbar cylinder (76), with which the chopper at the headlands can be directed sideways compared to the tractor (7).

Further, the fig. 2 shows the frame (17) of the chopper, the wheels (18), and in an advantageous embodiment also a lift- and carrying device (19) for a silage additive container (20). A not shown trailer connection can also be attached at the rear of the chopper.

The outlet pipe (13) can in an advantageous embodiment be equipped with a camera (21) to help the driver to direct the material beam (15) into the transport trailer (165).

For connecting the transport trailer (16) and for loading the container (20) the outlet pipe can be folded down to enable the camera (21) to catch the trailer connection- and container loading area otherwise not visible for the driver. This considerably reduces the risk of accidents in work.

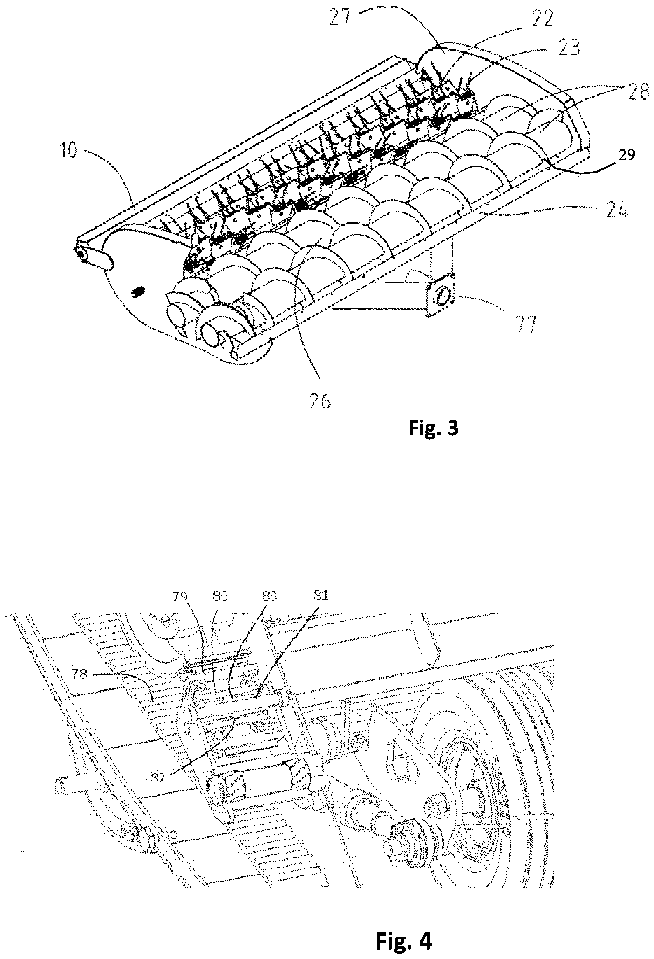

Fig 3. Shows the collection unit (6) with the upper cover plate dismantled. From the figure, a conventional, at the front to the frame (27) pivoting connected smoothing roller (10) is seen. This cooperates with the fast rotating pickup roller (22), whose flexible double fingers (23) are mounted in the form of a spiral.

These closely positioned double flexible fingers (23) throw the material from the swath (9) into the collection device (6) and up to the auger conveyor unit (26).

This consist of two transport augers (28) who rapidly and evenly transports the material sideways towards the feed unit (30) of the chopper unit (4). The transport augers are configured with mainly the same pitch and diameter and they do rotate in synchrony. Further, the distance between the shafts of the transport augers (28) is less than the auxiliary diameter of the auger spirals. These auger spirals, therefore, reach in between each other to achieve a self-cleaning effect when the spirals in the middle part work against each other and so helps to clear each other.

Fig. 4 shows details of the toothed belt transmission to synchronize the speed of the two transport augers (28). To avoid the toothed belt (78) to glide oblique on the pulleys, what easily happens also at the smallest slight angle error, the tension roller (79) is equipped double shafts. The outer shaft (80) of the tension roller (79) is hollow with a spherical groove (82) in the middle. This groove is adapted for a corresponding spherical bulge (83) in the middle of the inner shaft (81). As an external force acts on the tension roller (79) this spherical bulge (83) is pressed into the groove (82) and positions the external and the internal shafts sideways to each other.

The hole of the external shaft (80) do in an advantageous embodiment have conical shape outside the spherical furrow to allow considerable pendulum freedom between the external shaft (80) and the internal shaft (81).

If the toothed belt (78) tends to pull to the side, the tension roller (79) take a small angle and guides the belt automatically back to the center.

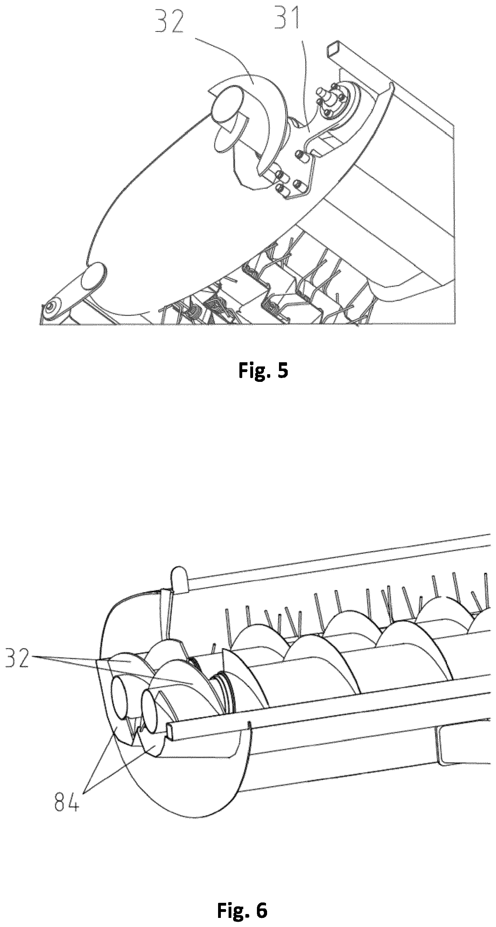

Fig. 5 shows that the transport augers (28) in the outlet's end are supported by bearings in a mounting plate (31), that hides only a small part of the auxiliary outlet projection of the augers.

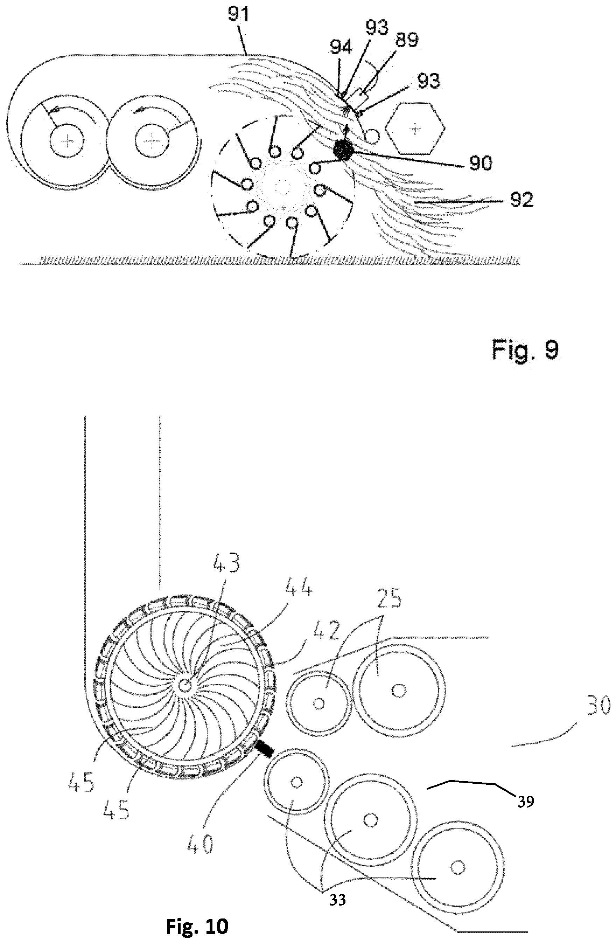

Bout of the transport augers (28) are equipped with removable spiral extensions (32) outside of the mounting plates (31) (one of them dismantled in the picture), who smoothen and guide the material to be chopped in against and partly in between them in the fig. 9 shown feed rollers (25, 33) of the chopper.

These spiral extensions (32) are in an advantageous embodiment designed as double spirals to enable a dynamic balance and to smooth up the flow of material, as to also efficiently clean away the straw shaped material that otherwise tends to start to collect around the edges of the mounting plates (31).

Fig. 6 shows that if the spiral extensions in addition are conical, (narrower at the outlet end) their bottom tray (84) can be designed to better lift up the straw formed material for better guiding in between the feed rollers (25, 33) of the chopper.

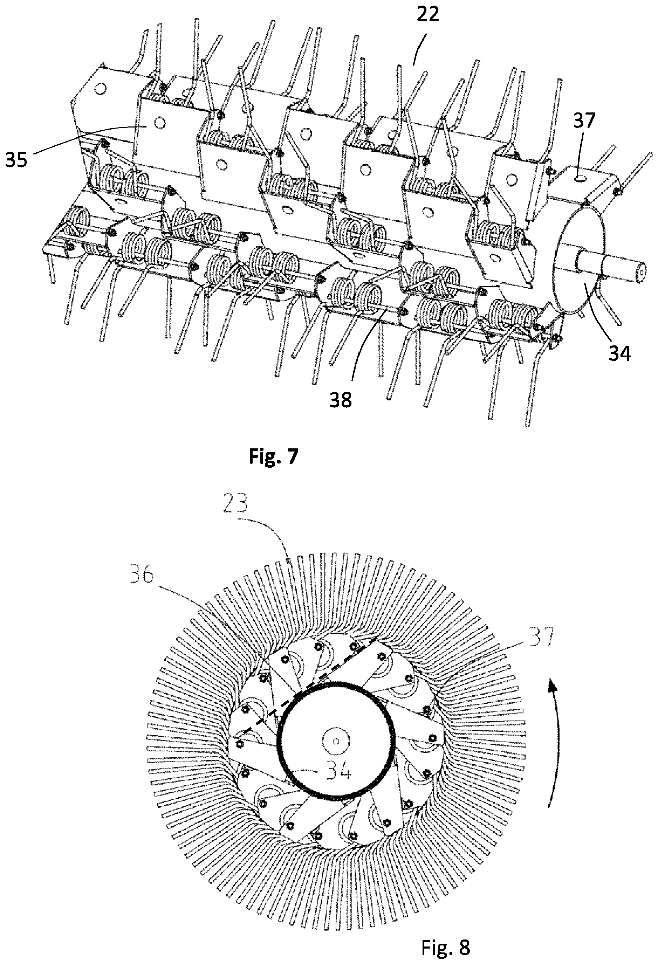

Fig. 7 shows the outer end of fast rotating pickup roller (22) in a close-up. The pickup roller is built around a central tube (34) whose mantle surface in step-like spiral form exhibits welded rejectors (35) who guide the straw shaped material away from the central tube (34).

Fig 8. shows that the flat rejector surfaces, which faces in the direction of rotation in an advantageous embodiment have such an inclination, that the intended extension of the surfaces (dashed line 36) tangents to the center tube of the pickup (34). The flexible double fingers (23) of the pickup roller are clamped at the rear of the rejectors (35) and so the spring coils of the double fingers are in direction of rotation fully hidden behind the rejectors (35). This prevents that straw-like material can find its way and be clamped between the wires in the spring spirals of the flexible double fingers (23), what can be the case in more traditionally build pickup rollers.

A securing bolt (38) mounted through the spring spirals keep a broken half-pin to the pickup roller and prevent so this broken half-pin come with the material in the chopper and further mix together in the fodder. During work, this half-pin is folded to the back by the material and cannot anymore assist in throwing the material upon the auger conveyor unit (26). During normal pause control eventually broken flexible spring fingers can easily be replaced with new ones.

Fig. 8 shows also that when the pitch of the coil formed by the rejects (35) has an advantageous embodiment, the axial projection of the flexible double tines (23) get a uniform fan shape so that the feed will be even.

In an advantageous embodiment, the rotation paths of the tines are forming co-axial circular planes, with a mutual distance of only approx. 2-3 times the diameter of the tine. Thus each singular tine needs to pick up only a very small amount of the straw shaped material. So the resilient double fingers (23) of the pickup roller (22) are prevented from only cutting sparsely placed grooves in wet and heavy crop, what easily can be the case with traditional types of pickup, where the scraper plates between the flexible tines prohibit the rotation planes of the tines can get closer to each other than approx. 10-14 times the diameter of the tine. A typical sample of such a traditional pickup can be found among others in the patent document US6244027. The scraper plates in fig. 1 and fig. 2 of the document have the position number 14. The number of tines pro revolution is only 4, what is clearly to be seen in the fig. 2 of this US document.

Fig. 9 shows a simplified cut out of the collection unit (6) with a detector (89) for hard subjects mounted.

In an advantageous embodiment, this detector is a piezoelectric accelerometer that registers vibration changes in a sensor beam (94) when it is hit by a hard object as example by a stone (90).

This sensor beam (94) is mounted with an isolating damper (93) to the cover (91) to reduce the background noise from the chopper and from the flow of straw shaped material (92).

If a hard object, for example, a stone (90) is present in the swath, it is often interleaved with the straw-shaped crop to be picked up. If the chopper then is equipped with a conventional pickup, like the one from the patent document US6244027 where the cam operated tines are mounted in parallel rows, the pin rows the material from the whole width of the swath is simultaneous lifted up, often without the pins then tearing the interleaving.

Thus a stone or one other heavy object interleaved in the material, more easily follow the material into the chopper, where the stone or the heavy object creates large damages to bout the knives (42) and to the counter knife (40).

The pickup roller presented in the explanation to the figures 7 and 8 has in contrary in spiral shape mounted fast rotating flexible tines (23), witch one by one and not in a group tear the swath and the interleaving, as the distribution of the tines (as seen from the figures 7 & 8) is such that not the whole width of the swath is lifted simultaneously, but each thine catches only a small amount of the straw-like material. Therefore stones and other hard objects are more easily separated from the material and are thrown by the tines (23) against the sensor beam (94).

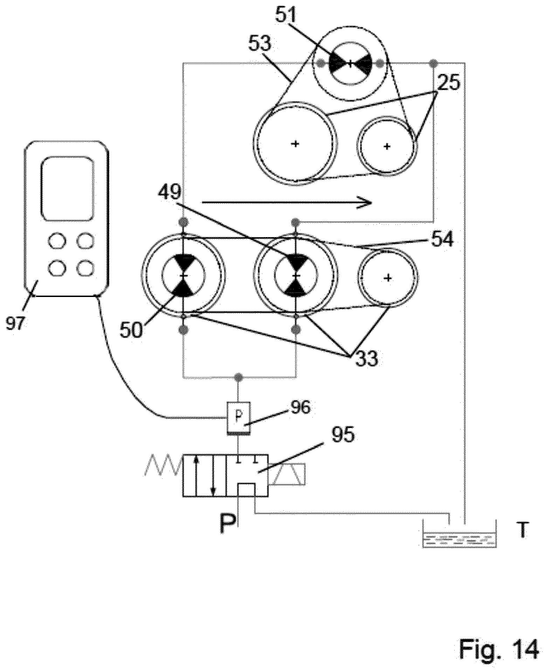

As the stone hit the sensor beam (94) it results in a significant change in the vibrations of the beam, that the signal noise from the detector (89) suddenly gives such a major change that the not shown electronic control unit of the chopper is able to register the change. The control unit then sends a stop command to the stop valve (95 fig. 14) of the feed unit, to stop the feed rollers (25, 33) and so prevent the hard object to reach the chopper knives.

It is a big advantage that the change in the signal is registered already far in advance before the straw shaped material reaches the feed rollers of the feed units, so that they can stop in time, before the hard object (90) get in between the chopper knives (42) and the counter knife (40). In traditional solutions, the metal detector is mostly built into the feed unit itself (even into the feed rollers) and therefore a very brutal stop of the feed rollers is needed to avoid damages. Such a brutal stop often require mechanical brakes integrated into the drive of the feed rollers.

Fig. 10 shows a cross-section of the chopper unit (4). Left below is the feed unit (30) to be seen with the upper feed rollers (33, 25), which feeds the straw shaped material over the counter knife (40) to be catch by the knives (42) of the chopper drum (41) and cut short between the chopper knives and the counter knife.

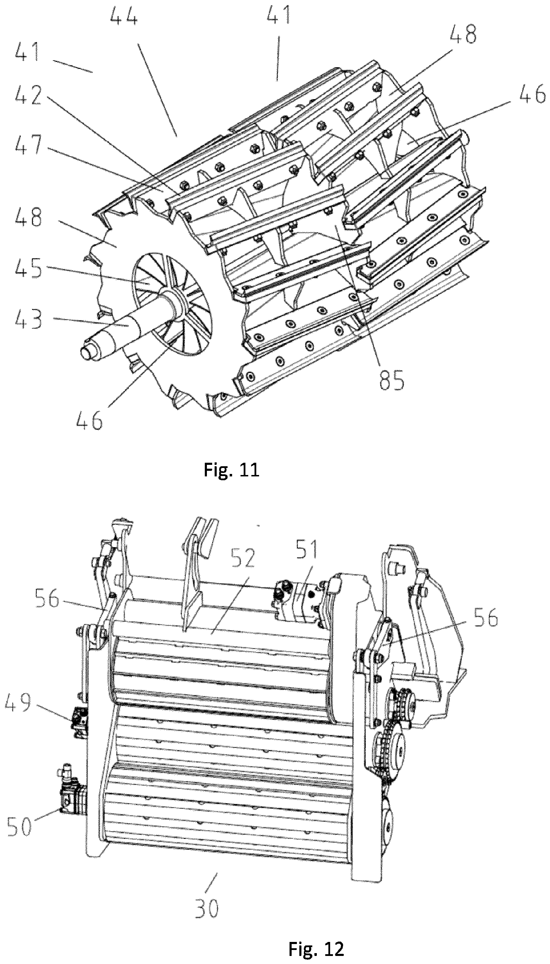

Fig. 11 shows the construction of the chopper drum (41) itself.

As to be seen from the drawings 10 and 11, an advantageous embodiment of the chopper drum (41) a turbo unit (44), consisting of a plurality of between the knives (42) and the central shaft (43) positioned bent or straight blower wings (45) and a suction opening (46) for the acceleration air in bout end gables of the chopping drum. The suction openings are limited by the mounting rim (48) of the knife supports (47). In the middle of the mounting rims (48) is a guide plate (85) to in addition to work as a mounting for the knife supports.

The guide plate (85) has also the task to guide the airflow from the bout suction openings (46) to avoid that harmful turbulence is created between the airstreams from the bout turbo units (44).

Fig. 12 shows the feed unit of the chopper (30), slightly inclined in the feed direction. From here we can identify the tree hydraulic motors (49, 50, 51) which together do drive the upper and the lower feed rollers, and also the protection of the chain transmission (53) for the upper feed rollers.

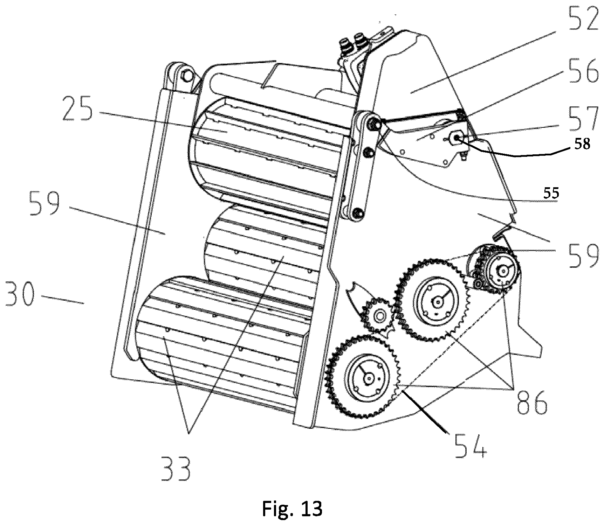

Fig. 13 shows an inclined view of the same feed unit. From this, the sprockets (86) of the chain transmission (54), which synchronize the lower feed rollers (33) are seen. The upper feed roller unit (52) in the fig. 11 and 12 is mounted in the pendulum arms (56). The through torsion shafts (57) to join the bout sides of the upper feed unit situated pendulum arms (56) helps to keep the upper feed unit (52) parallel with the lower rigid feed rollers (33) to sideways even out the stream of material from the spiral extensions (32) of the side transport unit (26). The upper feed rollers (25) have a limited movement range in height, to continuously press the straw shaped material down to the lower feed rollers (33). The material is then clamped between the upper and the lower feed rollers. As these are rotating in synchrony together, they feed in the straw formed material in an even flow.

In the fig. 13 also the gables (59) of the lower feed unit are clearly visible. It is to be noticed, that the upper feed unit, including its hydraulic motor (51) is inside these gables (59), and that torsion shaft (57) also in its lowest position is above the gables (59)

It means the gables do not need to have any (oval) holes for drive shafts or other drive elements to drive the higher feed unit (52), as in other more known solutions, (See for example: DE102013112326A1, DE102013004274B4, EP0541975B1), even as the upper feed rollers (25) and their drive continuously moves and down compared to the rigid lower feed rollers (33). As the incoming material is pressed together between the rollers in conventional feed units, surplus material is easily pressed out through these holes in the gables, and this disturbs the work by contributing to blockages.

Fig. 14 shows the principal scheme of the combined hydraulic- mechanical drive and synchronization of the feed rollers (25 and 33). The arrow between the rollers symbolizes the direction of the material flow.

The first two lower rollers (33) are each powered by a hydraulic motor connected in parallel and all three rollers are interconnected with the chain transmission (54) to synchronize the peripheral speed of the rollers.

The return oil from the hydraulic motor (50) of the first lower roller is directed through the hydraulic motor (51) of the upper feed unit (52) to the tank. So a hydraulic synchronization between the upper and the lower feed units are established. The chain transmission (53) between the hydraulic motor (51) and the upper feed rollers (25) ensures that all five feed rollers all time keeps the same periphery speed for even feed.

As all hydraulic motors are as above described bout mechanically and hydraulically interconnected a power distribution is obtained between the hydraulic motors so that the most loaded motor can utilize the power reserve from a less-loaded motor. Therefore the hydraulic capacity of the tractor is used optimally, as the pressure P to the feed unit (30) is not determinate by the torque of the most loaded hydraulic motor, but the hydraulic pressure from the tractor depends on the mean value of the momentum load of all three hydraulic motors.

In an advantageous embodiment, the hydraulically driven feed unit (30) of the chopper is equipped with a pressure sensor (96) to read the load of the feed rollers.

This pressure sensor can be used to give the control system of the chopper valuable information about the load on the chopper. The higher the pressure drop over the motors (49, 50, 51) are, the more material is fed into the chopper. In its most simple embodiment, the pressure sensor is an on-off switch to start and stop the pump for silage additive from the container (20).

In a more advanced embodiment, the pressure sensor is a proportional sensor and gives CANBUS information to the control system of the chopper to regulate the feed of silage additives proportional to the amount of the material flow through the chopper.

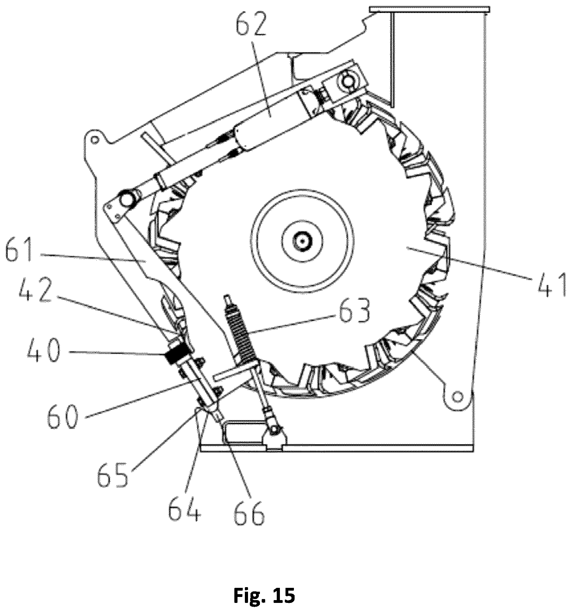

Fig. 15 shows the principle of the adjustment of the counter knife (40). The mounting (60) is at the bottom provided with a rounded counter knife support (64). This supports against inclined glide surfaces (65) in a (limited visible) V-shaped seat (66). The springs (63) press down the counter knife support without play in the seat (66) and create simultaneous torque around the support (64).

The linear adjustment motors (62) for the counter knife counteracts the torque of the springs (63) via the long adjustment arms (61) by limiting how far the adjusting arms (61) can move under the influence of the spring force, to keep a small play between the counter knife and the knifes (42) on the chopper drum.

Identical counter knife supports, glide surfaces, seat, adjusting arms and adjustment motor are also present on the opposite side of the inlet to the chopper. If a hard object follows the straw shaped material in towards the chopper, the counter knife (40) can spring rearwards away from the knives and so reduce the breakdown risk.

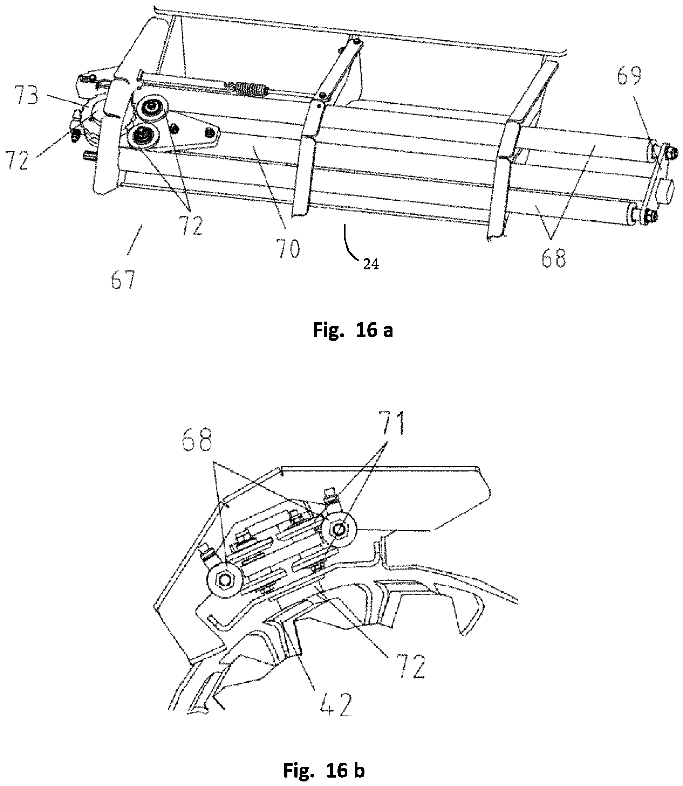

Fig. 16 shows more visible oblique from the top the bout torsion shafts (567) who guide the upper feed roller unit (52) and also the far adjustment arm (61) for the counter knife (40). In the upper part of the fig. 16 a grinding mechanism (67) for the chopper knives (42) is shown. The base for this grinding mechanism is two parallel hydraulic cylinders (68) with long hub. A mounting (69) connects the outer ends of the piston rods of the cylinders (68) with the grinding beam (70).

In the opposite end, the grinding beam shows 4 chamfered rollers (71), two on the upper side and two on the bottom side of the external surface of the cylinders (68).

Not shown disc springs press axially the upper and the lower rollers together to follow the surface of the cylinders (68) without play. A partly hidden ratchet mechanism (73) does in a conventional manner operate the indexing grinding head (72). For each to and fro movement of the cylinders (68), the ratchet turns in a conventional manner the grinding head one step forward and press so the in the grinding head integrated grinding stone a little bit closer in to against the knives (42) of the chopper drum.

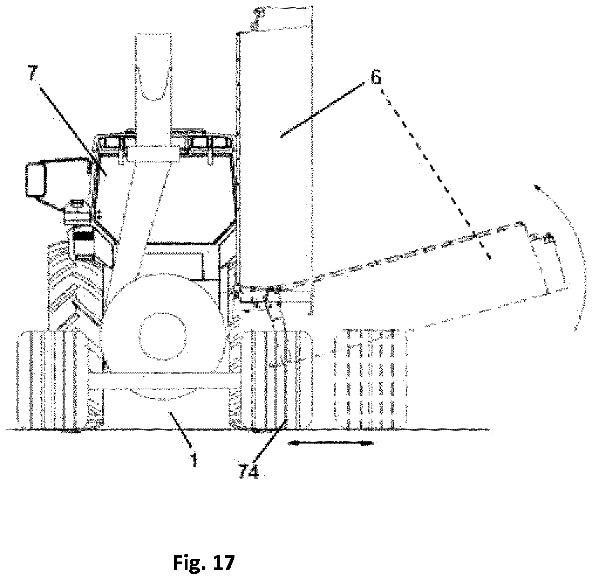

Fig. 17 shows the chopper (1) of the present innovation behind the tractor (7). The chopper is shown roughly schematic from the rear, without trailer attachment and without a lift- and carry elements (19) and without any container (20) for the silage additive. The collecting device (6) is shown in two positions.

With dotted lines, the collecting device (6) is shown in an intermediate position, which is advantageous if the material for some reason is blocked in the feed unit (30). Then the collecting device (6) be lifted partially, to release the pressure between spiral extensions (32) of the auger conveyor unit (26) and the feed rollers (25, 33).

Then it is possible to slightly reverse the hydraulic motors (49, 50, 51) to spit out the blockage.

In traditional choppers, such a situation creates great difficulties, as known solutions have a feeder auger equipped with spirals fixed tight in front of the feeder rollers and parallel to them. Se a big number of patent documents of self-propelled choppers as; US 6,244,027 B1, US 6,895,734 och US 8,806,844 B2

If the chopper does not have the ballast a full silage additive container or a to it connected trailer provide, the stability of the chopper can be jeopardized when the collecting device is lifted up or lowered down. This if the right-hand wheel (74) has not in advance been pushed out, to reduce the momentum levels of the tilt forces.

A telescopic right-hand wheel (74) is also of great benefit during work, in particular on moisture fields. Then the weight of the collecting unit can partly be hydro pneumatically carried by the right-hand wheel of the chopper in a corresponding manner as for offloading the cutter bar of a mounted mower. (See for example the document FI 20150072).

In an advantageous embodiment this operation is connected to the double acting hydraulic connector of the tractor in such a manner, that when starting to let down the collecting device (6), the right-hand wheel (74) will first be pressed out to the max. position before the collecting device starts to sink down. And vice versa at lifting up. Then the right-hand wheel will be drawn in first after the collecting device (6) has reached the transport position and mechanically been secured in this position.

The invention is of course not limited to the above described advantageous embodiment, but a plurality of variations of the same can be possible within the scope of the following patent claims.

## Claims

1. An agricultural harvester (1) for straw-like material to be connected to and pulled behind a tractor (7), the harvester comprising:
a frame (17) and support wheels (18) mounted to the frame,
a drawbar (2) mounted to the frame (17) and configured to be connected to tow connection of the tractor so that the agricultural harvester can be pulled behind the tractor,
a collecting unit (6),
a chopper unit (4) having a chopper drum (41) comprising chopper knives (42) and a center shaft (43),
a feeder unit (30),
and a drive shaft (5) configured to connect the center shaft (43) of the chopper unit (4) to a PTO of the tractor,
the agricultural harvester (1) is configured such that the chopper unit (4) is in a work position thereof situation straight behind the tractor (7),
whereby the drive shaft (5) is connected straight to the PTO of the tractor as well as to the center shaft (43) of the chopper unit (4), such that the chopper drum (41) is direct driven by the PTO,
whereby an axis of rotation of the chopper drum (41) as well as of the feeder unit (30) are parallel with each other and with the driving direction at straight drive paths, , and
whereby the projection of the center shaft (43) of the chopper unit (4) is positioned within the width of the tractor.

2. A harvester according to claim 1, wherein the collecting unit (6) is equipped with a detector (89) to register sudden changes in the signal noise that arises if hard objects (90) together with the straw-like material (92) hit the sensor beam (94)where the detector (89) is mounted and where an electronic control unit registers the change in the signal noise and immediately sends a stop signal to a drive of feed rollers (25, 33).

3. A harvester according to one of claims 1 to 2, wherein the collecting unit (6) is equipped with an auger conveyor unit (26) with at least two mainly parallel and in synchrony working transport augers (28) and where the axial projection of the periphery of the auger spirals pairwise cut each other in two points.

4. A harvester according one of claims 1 to 3, wherein the harvester has a feed unit (30) with upper- and lower feed roller units (52, 39), and the upper feed rollers (25) with their transmission (53) are vertically movable completely within the planes which the inwardly facing surfaces of the end gables (59) of the lower feed roller assembly (39) determine.

5. A harvester according 4, wherein the harvester has a feed unit (30) comprising upper- as well as lower feed roller units (25, 39) driven by more than one hydraulic motor (49, 50, 51), and the at least two of the hydraulic motors are connected in series and at least two of the motors are connected in parallel and equipped with a mechanical synchronization of their rotation speed.

6. A harvester according 4 or 5, wherein the harvester has a feed unit (30) comprising upper- as well as lower feed roller units (25, 39) driven by one or several hydraulic motors (49, 50, 51), wherein the registered pressure drop over the hydraulic motor or motors is used to give the control unit (97) of the chopper Information about the amount of material and the load of the chopper.

7. A harvester according to one of claims 1 to 6, wherein the harvester has a chopping unit (4) equipped with a counter knife (40), and the counter knife (40) have mounting (60) pivotal around a counter knife support (64) in a seat (66) and loaded by at least one suspension element (63) that press the counter knife support together with the counter knife (40) without play down in the seat (66) and tends to turn the counter knife support (64) with the counter knife (40) in against the knifes (42) of the chopper drum (41) and where this pivotal movement is limited inwards by an actuator (62) that regulates the play between the counter knife and the knifes of the chopper drum.

8. A harvester according to claim 7, wherein if a hard object enters the area between the knife (42) and the counter knife (40) the counter knife is foldable away to reduce damage.

## Patentansprüche

1. Landwirtschaftliche Erntemaschine (1) für strohartiges Erntegut, die mit einem Traktor (7) zu verbinden und dahinter zu ziehen ist, wobei die Erntemaschine umfasst:
einen Rahmen (17) und Stützräder (18), die an dem Rahmen montiert sind,
eine Deichsel (2), die an dem Rahmen (17) montiert ist und dazu ausgestaltet ist, mit der Schleppverbindung des Traktors verbunden zu werden, derart dass die landwirtschaftliche Erntemaschine hinter dem Traktor gezogen werden kann;
eine Sammeleinheit (6),
eine Häckslereinheit (4), die eine Häckslertrommel (41) aufweist, die Häckslermesser (42) und eine Mittelwelle (43) aufweist,
eine Zuführeinheit (30),
eine Antriebswelle (5), die dazu ausgestaltet ist, die Mittelwelle (43) der Häckslereinheit (4) mit einem Nebenabtrieb des Traktors zu verbinden,
wobei die landwirtschaftliche Erntemaschine (1) derart ausgestaltet ist, dass die Häckslereinheit (4) sich in einer Arbeitsposition davon in einer Lage direkt hinter dem Traktor (7) befindet,
wodurch die Antriebswelle (5) direkt mit dem Nebenabtrieb des Traktors sowie mit der Mittelwelle (43) der Häckslereinheit (4) verbunden ist, derart dass die Häckslertrommel (41) direkt durch den Nebenabtrieb angetrieben wird,
wodurch eine Drehachse der Häckslertrommel (41) sowie der Zuführeinheit (30) parallel zueinander und zur Fahrtrichtung in geraden Fahrwegen sind, und
wodurch die Projektion der Mittelwelle (43) der Häckslereinheit (4) innerhalb der Breite des Traktors positioniert ist.

2. Erntemaschine nach Anspruch 1, wobei die Sammeleinheit (6) mit einem Detektor (89) ausgerüstet ist, um plötzliche Änderungen beim Signalrauschen zu registrieren, das entsteht, wenn harte Gegenstände (90) zusammen mit dem strohartigen Erntegut (92) den Sensorstrahl (94) treffen, wo der Detektor (89) montiert ist und wo eine elektronische Steuereinheit die Änderung beim Signalrauschen registriert und unmittelbar ein Stoppsignal an einen Antrieb von Zuführwalzen (25, 33) sendet.

3. Erntemaschine nach einem der Ansprüche 1 bis 2, wobei die Sammeleinheit (6) mit einer Schneckenförderereinheit (26) mit mindestens zwei hauptsächlich parallelen und synchron arbeitenden Transportschnecken (28) ausgerüstet ist und wobei die axiale Projektion des Umfangs der Schneckenspiralen einander paarweise an zwei Punkten schneiden.

4. Erntemaschine nach einem der Ansprüche 1 bis 3, wobei die Erntemaschine eine Zuführeinheit (30) mit oberen und unteren Zuführwalzeneinheiten (52, 39) aufweist, und die oberen Zuführwalzen (25) mit ihrem Getriebe (53) vollständig innerhalb der Ebenen vertikal verschiebbar sind, welche die nach innen gewandten Oberflächen der Endgiebel (59) der unteren Zuführwalzenanordnung (39) bestimmen.

5. Erntemaschine nach Anspruch 4, wobei die Erntemaschine eine Zuführeinheit (30) aufweist, die sowohl obere als auch untere Zuführwalzeneinheiten (25, 39) umfasst, die von mehr als einem Hydraulikmotor (49, 50, 51) angetrieben werden, und die mindestens zwei von den Hydraulikmotoren in Reihe geschaltet sind und mindestens zwei der Motoren parallel geschaltet und mit einer mechanischen Synchronisierung ihrer Drehzahl ausgerüstet sind.

6. Erntemaschine nach Anspruch 4 oder 5, wobei die Erntemaschine eine Zuführeinheit (30) aufweist, die sowohl obere als auch untere Zuführwalzeneinheiten (25, 39) umfasst, die von einem oder mehreren Hydraulikmotoren (49, 50, 51) angetrieben werden, wobei der registrierte Druckabfall über den oder die Hydraulikmotoren verwendet wird, um der Steuereinheit (97) des Häckslers Informationen über die Menge an Erntegut und die Last des Häckslers zu verschaffen.

7. Erntemaschine nach einem der Ansprüche 1 bis 6, wobei die Erntemaschine eine Häckslereinheit (4) aufweist, die mit einem Gegenmesser (40) ausgerüstet ist, und das Gegenmesser (40) eine Halterung (60) aufweist, die um eine Gegenmesserstütze (64) in einem Sitz (66) schwenkbar ist und von mindestens einem Aufhängungselement (63) beansprucht wird, das die Gegenmesserstütze zusammen mit dem Gegenmesser (40) ohne Spiel unten im Sitz (66) drückt und dazu neigt, die Gegenträgerstütze (64) mit dem Gegenmesser (40) nach innen gegen die Messer (42) der Häckslertrommel (41) zu drehen, und wobei diese Schwenkbewegung nach innen durch ein Betätigungselement (62) beschränkt ist, welches das Spiel zwischen dem Gegenmesser und den Messern der Häckslertrommel regelt.

8. Erntemaschine nach Anspruch 7, wobei, wenn ein harter Gegenstand in den Bereich zwischen dem Messer (42) und dem Gegenmesser (40) eintritt, das Gegenmesser wegklappbar ist, um Schaden zu vermindern.

## Revendications

1. Moissonneuse agricole (1) pour récolte de type paille, destinée à être raccordée à et tirée derrière un tracteur (7), la moissonneuse comprenant :
un châssis (17) et des roues de support (18) montées sur le châssis,
une barre de traction (2) montée sur le châssis (17) et configurée pour être raccordée au raccordement de remorquage du tracteur de sorte que la moissonneuse agricole peut être tirée derrière le tracteur,
une unité de collecte (6),
une unité de broyeur (4) ayant un tambour de broyeur (41) comprenant des couteaux de broyeur (42) et un arbre central (43),
une unité d'alimentation (30),
et un arbre d'entraînement (5) configuré pour raccorder l'arbre central (43) de l'unité de broyeur (4) à une PTO du tracteur,
la moissonneuse agricole (1) est configurée de sorte que l'unité de broyeur (4) est dans la situation de sa position de travail juste derrière le tracteur (7),
moyennant quoi l'arbre d'entraînement (5) est directement raccordé à la PTO du tracteur ainsi qu'à l'arbre central (43) de l'unité de broyeur (4), de sorte que le tambour de broyeur (41) est directement entraîné par la PTO,
moyennant quoi un axe de rotation du tambour de broyeur (41) ainsi que l'unité d'alimentation (30) sont parallèles entre eux et par rapport à la direction d'entraînement dans des trajectoires d'entraînement droites, et
moyennant quoi la saillie de l'arbre central (43) de l'unité de broyeur (4) est positionnée dans la largeur du tracteur.

2. Moissonneuse selon la revendication 1, dans laquelle l'unité de collecte (6) est équipée avec un détecteur (89) pour enregistrer les changements soudains du bruit de signal qui se produit si des objets durs (90) conjointement avec la récolte de type paille (92) heurtent le faisceau de capteur (94) où le détecteur (89) est monté et où l'unité électronique de commande enregistre le changement du bruit de signal et envoie immédiatement un signal d'arrêt à un entraînement des rouleaux d'alimentation (25, 33).

3. Moissonneuse selon l'une des revendications 1 à 2, dans laquelle l'unité de collecte (6) est équipée avec une unité de transporteur à vis sans fin (26) avec au moins deux vis sans fin de transport (28) principalement parallèles et travaillant de manière synchrone et où les saillies axiales de la périphérie des spirales de la vis sans fin se coupent par paire en deux points.

4. Moissonneuse selon l'une des revendications 1 à 3, dans laquelle la moissonneuse a une unité d'alimentation (30) avec des unités de rouleau d'alimentation supérieur et inférieur (52, 39), et les rouleaux d'alimentation supérieurs (25) avec leur transmission (53) sont complètement mobiles verticalement dans les plans que les surfaces orientées vers l'intérieur des pignons d'extrémité (59) de l'ensemble de rouleau d'alimentation inférieur (39) déterminent.

5. Moissonneuse selon la revendication 4, dans laquelle la moissonneuse a une unité d'alimentation (30) comprenant des unités de rouleau d'alimentation supérieur et inférieur (25, 39) entraînées par plus d'un moteur hydraulique (49, 50, 51) et les au moins deux moteurs hydrauliques sont raccordés en série et au moins deux des moteurs sont raccordés en parallèle et équipés avec une synchronisation mécanique de leur vitesse de rotation.

6. Moissonneuse selon la revendication 4 ou 5, dans laquelle la moissonneuse a une unité d'alimentation (30) comprenant des unités de rouleau d'alimentation supérieur et inférieur (25, 39) entraînées par un ou plusieurs moteurs hydrauliques (49, 50, 51), dans laquelle la chute de pression enregistrée sur le moteur ou les moteurs hydraulique(s) est utilisée pour donner à l'unité de commande (97) du broyeur, l'information concernant la quantité de matériau et la charge du broyeur.

7. Moissonneuse selon l'une des revendications 1 à 6, dans laquelle la moissonneuse a une unité de broyage (4) équipée avec un contre-couteau (40) et le contre-couteau (40) a un support (60) pouvant pivoter autour d'un support de contre-couteau (64) dans un siège (66) et chargé par au moins un élément de suspension (63) qui comprime le support de contre-couteau conjointement avec le contre-couteau (40) sans jeu dans le siège (66) et a tendance à faire tourner le support de contre-couteau (64) avec le contre-couteau (40) contre les couteaux (42) du tambour de broyeur (41) et où ce mouvement pivotant est limité vers l'intérieur par un actionneur (62) qui régule le jeu entre le contre-couteau et les couteaux du tambour de broyeur.

8. Moissonneuse selon la revendication 7, dans laquelle si un objet dur entre dans la zone entre le couteau (42) et le contre-couteau (40), le contre-couteau peut être plié pour réduire l'endommagement.
